# EUROPÄISCHE PATENTSCHRIFT

(11) **EP 1 314 612 B1**
(45) Veröffentlichungstag und Bekanntmachung des Hinweises auf die Patenterteilung: **03.01.2007**
(21) Anmeldenummer: 02024471.1
(22) Anmeldetag: 29.10.2002
(51) Int. Cl.: B60R 13/04, B44C 1/22, B41M 5/24

(54) **Dekorelement für Kraftfahrzeuge**
Decorative element for motor vehicles
Elément décoratif pour des véhicules automobiles

(30) Priorität: 26.11.2001 DE 10157740
(43) Veröffentlichungstag der Anmeldung: 28.05.2003
(73) Patentinhaber: Burg Design GmbH, 4400 Steyr (AT)
(72) Erfinder: Reinthaler, Armin, 4716 Hofkirchen an der Trattnach (AT)
(74) Vertreter: Popp, Eugen

(56) Entgegenhaltungen:
- WO-A-00/46045
- WO-A-01/15916
- DE-A- 3 829 221
- DE-A- 4 209 933
- DE-A- 10 118 178
- DE-A- 19 702 977
- US-A- 5 817 243
- US-B1- 6 231 196

## Beschreibung

Die Erfindung betrifft ein Schwellerbereich-Dekorelement, gemäß dem Oberbegriff des Patentanspruches 1.

Herkömmlicherweise wird an der Oberfläche eines Karosserieschwellers im Türenbereich eines Kraftfahrzeuges eine Aluminiumleiste angeordnet, die eine erodierte sichtbare Oberfläche aufweist. Derartige Aluminiumleisten zeichnen sich dadurch aus, daß in ihren Oberflächen mittels eines Erodierverfahrens jeweils ein Schriftzug mit dem Namen des Fahrzeugherstellers kenntlich gemacht ist. Aufgrund der Oberflächenabtragung, auf welcher das Erodierverfahren basiert, sind Schriftzüge zwar durch ihr Hervorheben bzw. Zurücksetzen gegenüber der restlichen Leistenoberfläche erkennbar, bieten jedoch wenig Gestaltungsspielraum bezüglich einer dekorativen Ausgestaltung dieser Oberfläche. Dies betrifft insbesondere das auf zwei Dimensionen und Einfarbigkeit begrenzte Ausgestalten der Oberfläche.

Demzufolge liegt der vorliegenden Erfindung die Aufgabe zugrunde, ein Dekorelement der eingangs genannten Art zu schaffen, das eine Steigerung der optischen Attraktivität von Oberflächen, insbesondere von Kraftfahrzeugschwellern einfach und kostengünstig ermöglicht. Diese Aufgabe wird durch die Merkmale des Anspruches 1 gelöst.

Das erfindungsgemäße Dekorelement zeichnet sich dadurch aus, daß ein transparentes Flachteil mit mindestens einer darauf aufgebrachten Druckfläche, die sich zumindest teilweise über mindestens eine Oberfläche des Flachteils erstreckt, ausgestattet ist, wobei entlang der Druckflächengrenzen mindestens eine mittels eines Laserstrahls erzeugte linienförmige Nut mit begrenzter Tiefe ausgebildet ist. Die Behandlung des transparenten Flachteils mit einem Laserstrahl von der rückseitigen Oberfläche aus entlang der Druckflächengrenzen hat zur Folge, daß die Druckfläche, die einen Schriftzug mit dem Namen des Fahrzeugherstellers darstellen kann, auf eine die Vorderseite betrachtende Person als dreidimensionale Darstellung wirkt.

Des weiteren zeichnet sich die Erfindung durch die Verwendung von Druckflächen mit unterschiedlichen Oberflächenstrukturen und/oder Farbgestaltungen und/oder optischen Effekten aus, so daß zusätzlich zu dem 3-D-Effekt eine optisch ansprechende Hervorhebung ausgewählter Druckflächen, wie der Schriftzug, möglich ist.

Vorteilhaft können entlang der Druckflächengrenze zwei parallel zueinander verlaufende linienförmige Nuten ausgebildet sein, wobei eine Nut innerhalb der Druckfläche und eine zweite Nut außerhalb der Druckfläche oder zumindest an dem außenseitigen Rand der Druckfläche verlaufen.

Das transparente, vorzugsweise aus Polymethylmetacrylat bzw. Plexiglas bestehende Flachteil weist vorzugsweise eine Dicke von 0,3-10 mm auf, wobei die Nuttiefe dem 0,5 bis 0,75-fachen der Flachteildicke entspricht.

Die Druckflächen, welche vorzugsweise mittels eines Siebdruckverfahrens auf die Oberflächen des transparenten Flachteils aufgebracht werden, können entweder auf der Rückseite oder auf der Vorderseite oder verteilt auf der Rück- und Vorderseite des Flachteils aufgedruckt sein. Sofern eine oder mehrere Druckflächen auf der Vorderseite des Flachteils aufgebracht sind, kann das Flachteil nach dem Druckvorgang und der Laserbehandlung zusätzlich mit einer Abdeckschicht, insbesondere einer transparenten Lackschicht, überzogen werden, um so eine kratz- und stoßfeste Oberfläche des Flachteils für den Schwellerbereich zu erhalten.

Ebenso kann die Rückseite, sofern sie bedruckt und laserbehandelt ist, mit einer Abdeckschicht versehen sein, um zum einen eine Beschädigung der Druckflächen und zum anderen ein Eindringen von Verunreinigungen in die mittels eines Laserstrahls erzeugten Nuten zu vermeiden.

Die Druckflächen werden gemäß einer bevorzugten Ausführungsform mit unterschiedlichen Oberflächenstrukturen, Farbgestaltungen und/oder optischen Effekten, wie das Hinzumischen von irisierenden Effektpigmenten zu der Druckerfarbe ausgestattet. Auf diese Weise ist eine Hervorhebung des 3-D-Effektes mittels unterschiedlicher Oberflächenstrukturen, Farben und optischer Effekte der Druckflächen möglich. Dies trifft insbesondere dann zu, wenn eine erste, den Schriftzug darstellende Druckfläche von einer zweiten, den Schriftzug umgebenden Druckfläche derart unterschiedlich ausgebildet ist, daß die erste Druckfläche eine gebürstete Oberfläche aufweist, wohingegen die zweite Druckfläche sich durch eine Oberfläche mit metallisch erscheinender Farbwiedergabe auszeichnet. Selbstverständlich ist zur Erzielung des 3-D-Effektes eine linienförmige Nut mit begrenzter Tiefe zwischen der ersten und der zweiten Druckfläche angeordnet.

Das Flachteil besteht erfindungsgemäß aus einem UV-lichtbeständigem leichten Material mit einer Dichte im Bereich von 1,0 g/cm³ - 1,5 g/cm³, das in einem Temperaturbereich von -50° bis +150°C beständig gegenüber Kälte und Wärme ist und das eine hohe Festigkeit im Sinne einer hohen Bruch- bzw. Splittersicherheit sowie eine hohe Widerstandsfähigkeit gegen Verkratzen aufweist. Das Flachteil ist zudem weitgehend witterungsbeständig, bevorzugt schlecht brennbar und nicht notwendiger-, aber wünschenswerterweise, ein guter elektrischer Isolator. Die Vorder- bzw. Sichtseite des Flachteils ist hochglänzend, matt und/oder strukturiert ausgebildet. Des weiteren kann das Flachteil aus einem transparenten eingefärbten Material bestehen.

Das Druckflächenmaterial kann vor der Aufbringung auf das Flachteil entweder in Form einer Folie vorliegen, welche mit einem vorzugsweise siebdruckfähigen Farbstoff bedruckt ist, oder es kann aus einem oder mehreren, vorzugsweise mittels Siebdruck direkt aufgetragenen Farbstoffen ohne Verwendung einer Folie bestehen. Der verwendete Farbstoff ist UV-licht- und temperaturbeständig, um ein Verblassen des Dekorelementes auch bei einer längeren Einwirkung von Licht, insbesondere Tagesoder Sonnenlicht, zu vermeiden. Die Temperaturbeständigkeit erstreckt sich hierbei auf eine Temperatur von bis zu 220°C.

Bei dem Zusatz von irisierenden Effektpigmenten vermittelt der auf das Flachteil aufgetragene Farbstoff den Eindruck eines geschnittenen Steins. Alternativ zu den üblicherweise verwendeten Siebdruckverfahren ist auch die Anwendung eines Offset-Druckverfahrens bzw. eines Hoch- oder Tiefdruckverfahrens zur Aufbringung des Druckflächenmaterials auf das transparente Flachteil denkbar. Auch das Aufmalen eines Dekors ist möglich.

Sofern die Druckflächen an der Rückseite des transparenten Flachteils angeordnet sind, besteht ein äußerst wirksamer Schutz dieser Druckflächen gegenüber äußeren Einflüssen, wie beispielsweise mechanischen Beschädigungen, Feuchtigkeit und Beschädigungen aufgrund von festklebenden Flüssigkeiten. Diese Schutzwirkung kommt im Schwellerbereich der Karosserie eines Kraftfahrzeuges, also in dem Fußbereich, der von den Benutzern des Kraftfahrzeuges mit den Schuhen betreten wird, zur Geltung.

Zudem kann ein Glanzeffekt aufgrund einer hochglänzend ausgebildeten Vorderseite des Flachteils oder mit Hilfe von den 3-D-Effekt verstärkenden Lichtreflexionen gesteigert, oder, mittels einer rauhen Oberfläche der Sichtseite, die die Vorderseite des Flachteils darstellt, abgeschwächt werden. Ebenso ist es möglich, daß die Griffigkeit und/oder Rutschfestigkeit durch Aufrauhen der Dekor-elementoberfläche verbessert ist, um so das Abrutschen des Fußes einer das Kraftfahrzeug benutzenden Person beim Ein- und Aussteigen im Türbereich zu verhindern.

Zum Schutz der Dekorelementoberfläche kann vorzugsweise eine PU-Harzschicht zur Förderung der Kratzfestigkeit aufgebracht werden, wobei diese Harzschicht derart ausgebildet sein muß, daß sie den mittels der Laserbehandlung hervorgerufenen 3-D-Effekt nicht beeinflußt. Alternativ kann eine Klarsicht-Lackschicht verwendet werden.

Gemäß einer Weiterbildung der Erfindung weist die durch die Laserbehandlung hervorgerufene linienförmige Nut in ihrem Verlauf unterschiedliche Tiefen auf, so daß ein dreidimensionaler Effekt in lokalen Bereichen des Dekorelementes unterdrückt oder gefördert werden kann. Ferner können die linienförmigen Nuten nicht nur einen sich im wesentlichen senkrecht zu der rückseitigen Oberfläche des Flachteils erstreckenden Tiefenverlauf, sondern auch einen dazu angewinkelten Tiefenverlauf aufweisen. Ein derartiger unter der Verwendung eines 5-Achsen-Lasers erzeugter angewinkelter Tiefenverlauf hat zusätzliche Effekte, wie das Erreichen eines mehrdimensionalen Sichteffektes zur Folge.

Weitere vorteilhafte Ausführungsformen ergeben sich aus den Unteransprüchen.

Nachfolgend wird die Erfindung anhand verschiedener Ausführungsbeispiele und mit Hilfe der Zeichnungen näher erläutert. Hierbei zeigen:
- Fig. 1: eine Draufsicht eines Dekorelementes gemäß einer ersten Ausführungsform der Erfindung;

- Fig. 2: eine Schnittansicht entlang des Schnittes I-I in Fig. 2 des Dekorelementes gemäß der ersten Ausführungsform vor der Laserbehandlung;
- Fig. 3: eine Schnittansicht entlang des Schnittes I-I in Fig. 2 des Dekorelementes gemäß der ersten Ausführungsform nach der Laserbehandlung;
- Fig. 4: eine Schnittansicht entlang des Schnittes II-II in Fig. 3 des Dekorelementes gemäß der ersten Ausführungsform;
- Fig. 5: eine Draufsicht eines Dekorelementes gemäß einer zweiten Ausführungsform der Erfindung;
- Fig. 6: eine Schnittansicht entlang des Schnittes III-III in Fig. 5 des Dekorelementes gemäß der zweiten Ausführungsform vor der Laserbehandlung;
- Fig. 7: eine Schnittansicht entlang des Schnittes III-III in Fig. 5 des Dekorelementes gemäß der zweiten Ausführungsform nach der Laserbehandlung, und
- Fig. 8: eine Draufsicht eines Dekorelementes gemäß einer dritten Ausführungsform.

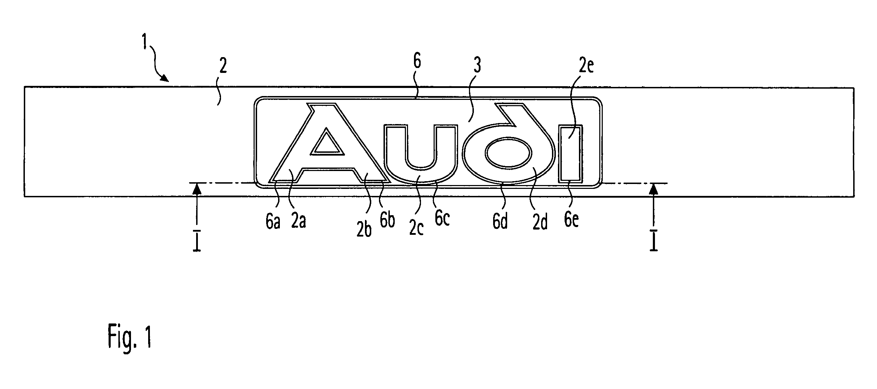

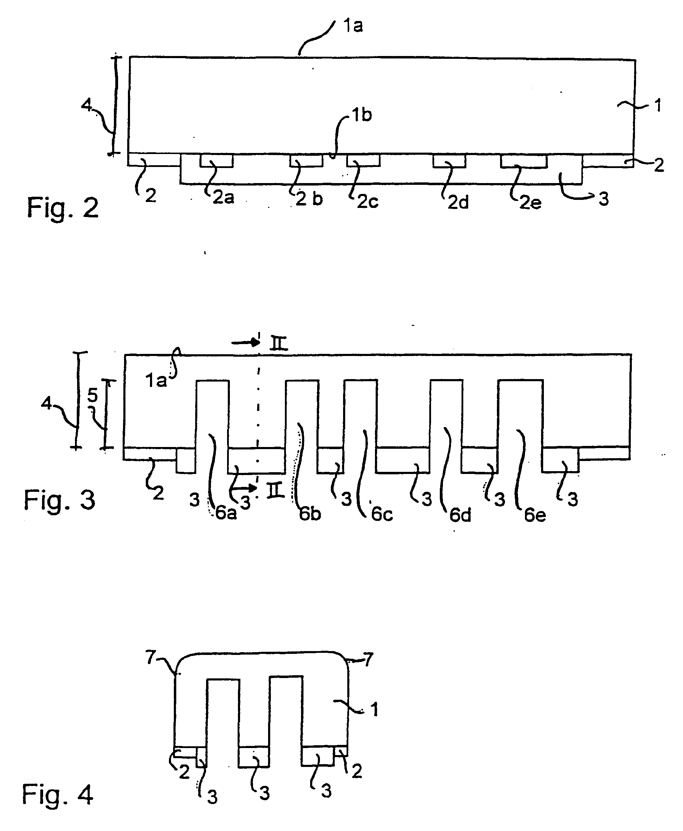

Die in Fig. 1 und Fig. 2, welche eine Schnittansicht entlang des Schnittes I-I in Fig. 1 darstellt, gezeigte erste Ausführungsform des erfindungsgemäßen Dekorelementes besteht aus einem transparenten, vorzugsweise Plexiglas enthaltenden Flachteil 1 mit einer Vorderseite 1a, die die Sichtseite, also die nach oben gewandte Seite im Schwellerbereich der Karosserie darstellt, und mit einer Rückseite 1b. Das transparente Flachteil 1 weist an seiner Rückseite 1b eine erste Druckfläche 2 mit gebürsteter Oberfläche auf.

Durch ein während der Anwendung des Siebdruckverfahrens hier nicht näher beschriebenen Ablauf wird die erste Druckfläche 2 derart aufgetragen, daß ein Bereich, der für die Auftragung einer zweiten Druckfläche 3 vorgesehen ist, frei bleibt. Sobald die erste Druckfläche 2 einschließlich der einzelnen Druckflächenbereiche 2a, 2b, 2c, 2d und 2e, welche die Buchstaben des Schriftzuges "Audi" darstellen, auf der Rückseite 1b des transparenten Flachteiles 1 aufgetragen worden sind, wird die zweite Druckfläche 3 mit einer metallisch glänzenden ungebürsteten Oberfläche aufgetragen. Das transparente Flachteil weist eine Dicke von ca. 2 mm auf.

Fig. 3 zeigt in einer Schnittansicht entlang des Schnittes I-I in Fig. 1 das Dekorelement nach einer Laserbehandlung. Hierfür wird ein Laserstrahl eines CO₂-Lasers, der jedoch auch als Excimer-Laser zur hitzefreien Abtragung des Flachteils ausgebildet sein kann, in eine im wesentlichen senkrechten Richtung zu der rückseitigen Oberfläche 1b auf die Rückseite 1b gerichtet. Unter Berücksichtigung einer entsprechenden Dosierung der Laserausgangsleistung bzw. des Energiewertes schneidet der Laserstrahl linienförmige Nuten 6a, 6b, 6c, 6d und 6e mit einer Breite von mehreren µm und mit einer begrenzten Tiefe 5 in das transparente Flachteil 1. Der Nutverlauf wird hierfür entlang der Druckflächengrenzen zwischen den ersten Druckflächen 2a-2e und der zweiten Druckfläche 3 geführt.

Nach der Durchführung einer derartigen Laserbehandlung erscheint der Schriftzug "Audi" bei Betrachtung des Dekorelements aufgrund der erzeugten Nuten 6a-6e in dreidimensionaler Ansicht.

Fig. 4 zeigt eine Schnittansicht entlang des Schnittes II-II gemäß Fig. 3 der ersten Ausführungsform der Erfindung. Die Vorderseite 1a des transparenten Flachteils, die zugleich die Sichtseite darstellt, ist mit einer PU-Harzschicht bedeckt, deren seitlichen Kantenbereiche mit Rundungen 7 versehen sind. Derartig abgerundete Kantenbereiche können derart dimensioniert sein, daß die obere Seite der Rundung 7 mit Beginn der ersten Nut, aus Richtung der Abrundung 7 betrachtet, endet. Auf diese Weise wird für den Betrachter der Eindruck geschaffen, daß sich der Schriftzug scheinbar bis zu den in Fig. 4 gezeigten seitlichen Randbereichen des Dekorelementes erstreckt.

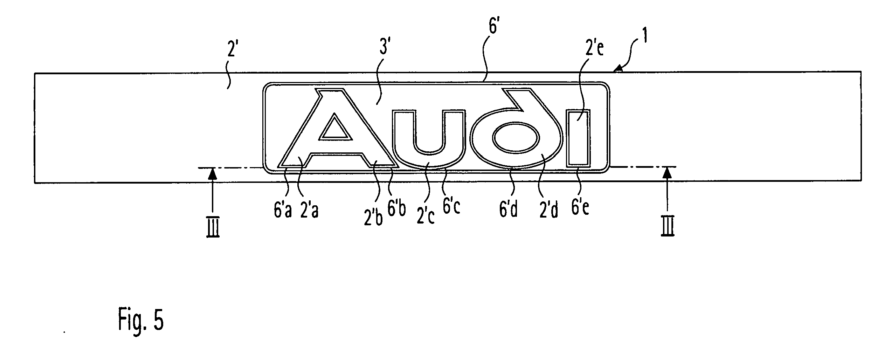

Fig. 5 zeigt eine Draufsicht auf ein erfindungsgemäßes Dekorelement gemäß einer zweiten Ausführungsform. Diese Ausführungsform unterscheidet sich von der ersten Ausführungsform dahingehend, daß die erste Druckfläche als Druckschicht 2', 2'a, 2'b, 2'c, 2'd, 2'e und 2'f auf der Vorderseite 1a des Flachteiles 1 aufgebracht ist, wohingegen die zweite Druckschicht 3' wiederum auf der Rückseite 1b aufgetragen worden ist. Die zweite Druckschicht 3' weist wiederum eine Ausdehnung auf, die mindestens dem in der ersten Druckschicht 2' ausgesparten Anteil entspricht.

Die erste Druckschicht 2' ist mit einer gebürsteten Oberflächenstruktur ausgestattet.

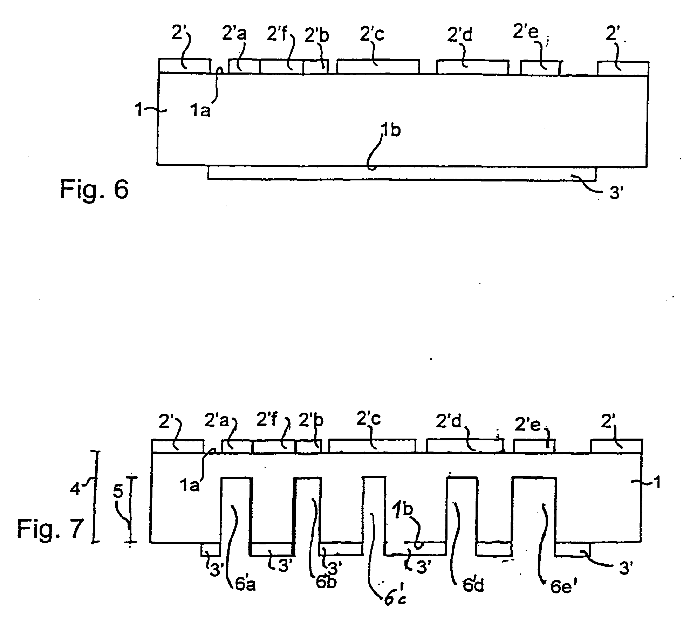

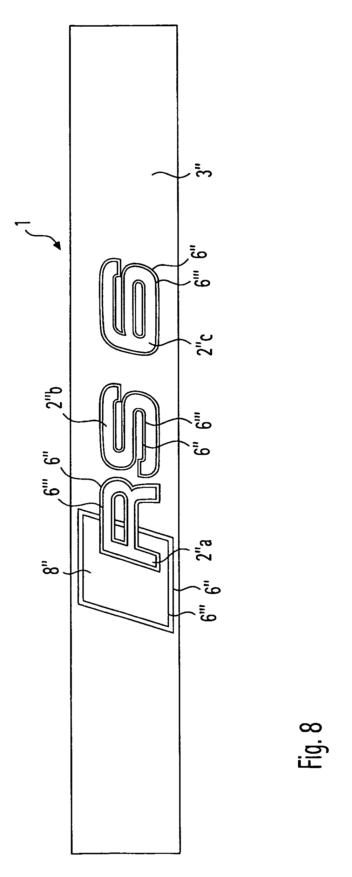

Die Figuren 6 und 7 zeigen hierfür eine Schnittansicht entlang des Schnittes III-III der zweiten Ausführungsform des Dekorelementes gemäß Fig. 5. Wie aus den in den Figuren 6 und 7 gezeigten Darstellungen hervorgeht, werden mittels eines im wesentlichen senkrecht zu der Rückseite 1b orientierten Laserstrahls wiederum Nuten 6'a, 6'b, 6'c, 6'd und 6'e entlang der äußeren Ränder der Buchstaben erzeugt, um so einen 3-D-Effekt zu erhalten.

Fig. 8 zeigt eine Draufsicht eines Dekorelementes gemäß einer dritten Ausführungsform der Erfindung, bei dem über eine erste Druckschicht 2''a, 2''b und 2''c mit sibermetallig glänzender Oberfläche eine zweite Druckschicht 3' mit schwarzem Farbstoff aufgetragen ist. Eine dritte Druckschicht 8'' mit rotem Farbstoff wurde vor der Auftragung der zweiten Druckschicht 3'' ebenso wie die erste und zweite Druckschicht auf der Rückseite des transparenten Flachteils angeordnet.

Das Dekorelement gemäß der dritten Ausführungsform der Erfindung unterscheidet sich von den beiden vorangegangenen Ausführungsformen darin, daß es entlang der Druckflächengrenzen nicht nur eine linienförmige Nut, sondern zwei parallel zueinander eng benachbarte linienförmige Nuten 6'' und 6''' aufweist. Auf diese Weise wird insbesondere in Kombination mit der hervorhebenden silbermetalligen Farbgestaltung des Schriftzuges "RS 6" der 3-D-Effekt nochmals verstärkt. Die zueinander benachbarten Nuten sind mit einem Abstand von mehreren um parallel verlaufend am Rande der ersten Druckfläche angeordnet.

### Bezugszeichenliste

- 1: transparentes Flachteil
- 1a: Vorderseite bzw. Sichtseite des Flachteils
- 1b: Rückseite des Flachteils
- 2, 2a, 2b, 2c, 2d, 2e 2' 2'a, 2'b, 2'c, 2'd, 2'e, 2'f 2''a, 2''b , 2''c: erste Druckfläche
- 3, 3', 3'',: zweite Druckfläche
- 5: Dicke des Flachteils
- 6: Tiefe der Nuten mit Bezug auf das Flachteil
- 6, 6a, 6b, 6c, 6e, 6', 6'a, 6'b, 6'c, 6'd, 6'e 6'', 6''': linienförmige Nuten mit begrenzter Tiefe
- 7: Abrundungen
- 8'': dritte Druckfläche

## Patentansprüche

1. Schwellerbereichdekorelement,
**dadurch gekennzeichnet, dass**
ein transparentes Flachteil (1) mit mindestens einer darauf aufgebrachten bedruckten Fläche (2, 2a-2e; 2', 2'a-2'f;2"a-2"c; 3; 3'; 3"; 8"), die sich zumindest teilweise über mindestens eine Oberfläche (1a, 1b) des Flachteils (1) erstreckt, entlang der Grenze der bedruckten Fläche mindestens eine mittels eines Laserstrahls erzeugte linienförmige Nut (6; 6'; 6"; 6"') aufweist, wobei eine Tiefe (5) der Nut einen Wert aufweist, welcher der 0,5 bis 0,75-fachen Dicke (4) des Flachteils (1) entspricht.

2. Schwellerbereichdekorelement nach Anspruch 1,
**dadurch gekennzeichnet, dass**
eine erste Nut (6"') innerhalb der bedruckten Fläche (2"a-2"c) und eine zweite Nut (6") außerhalb der bedruckten Fläche (2"a-2"c) parallel zu der Grenze der bedruckten Flächen verläuft.

3. Schwellerbereichdekorelement nach einem der vorangegangenen Ansprüche,
**dadurch gekennzeichnet, dass**
eine ersten bedruckte Fläche (2a-2e; 2'a-2'e; 2"a-2"c) einen Schriftzug und eine zweite bedruckte Fläche (3; 3'; 3") eine den Schriftzug umgebende Fläche darstellt.

4. Schwellerbereichdekorelement nach Anspruch 3,
**dadurch gekennzeichnet, dass**
die erste, zweite und jede weitere bedruckte Fläche (2, 2a-2e; 2', 2'a-2'f;2"a-2"c; 3; 3'; 3"; 8") unterschiedliche Oberflächenstrukturen und/oder Farbgestaltungen und/oder optische Effekte aufweisen.

5. Schwellerbereichdekorelement nach einem der vorangegangenen Ansprüche,
**dadurch gekennzeichnet, dass**
die bedruckten Flächen (2, 2a-2e; 2', 2'a-2'f;2"a-2"c; 3; 3'; 3"; 8") auf der Rückseite (1b) des transparenten Flachteils (1) aufgebracht sind.

6. Schwellerbereichdekorelement nach einem der Ansprüche 1-4,
**dadurch gekennzeichnet, dass**
eine bedruckte Fläche (2', 2'a-2'e) auf der Vorderseite (1a) und eine zweite bedruckte Fläche (3') auf der Rückseite aufgebracht ist.

7. Schewellerbereichdekorelement einem der vorangegangenen Ansprüche,
**dadurch gekennzeichnet, dass**
die bedruckten Flächen (2, 2a-2e; 2', 2'a-2'f;2"a-2"c; 3; 3'; 3"; 8") aus UVlichtbeständigem und temperaturbeständigem Material, insbesondere für einen Temperaturbereich von -50° bis +150°C, sind.

8. Schwellerbereichdekorelement nach einem der vorangegangenen Ansprüche,
**dadurch gekennzeichnet, dass**
das Material der bedruckten Flächen (2, 2a-2e; 2', 2'a-2'f;2"a-2"c; 3; 3'; 3"; 8") irisierende Effektpigmente enthält.

9. Schwellerbereichdekorelement nach einem der vorangegangenen Ansprüche,
**dadurch gekennzeichnet, dass**
die Vorder- bzw. Sichtseite (1a) des Flachteils (1) hochglänzend und/oder strukturiert ausgebildet ist.

10. Schewellerbereichdekorelement nach einem der vorangegangenen Ansprüche,
**dadurch gekennzeichnet, dass**
das Flachteil (1) farbig durchscheinend ausgebildet ist.

11. Schwellerbereichdekorelement nach einem der vorangegangenen Ansprüche,
**dadurch gekennzeichnet, dass**
das Material des Flachteils (1) ein Acrylmaterial ist.

12. Schwellerbereichdekorelement nach einem der vorangegangenen Ansprüche,
**dadurch gekennzeichnet, dass**
das Material des Flachteils (1) Polycarbonat ist.

13. Schwellerbereichdekorelement nach einem der vorangegangenen Ansprüche,
**dadurch gekennzeichnet, dass**
das transparente Flachteil (1) eine Dicke im Bereich von 0,3 mm - 10 mm aufweist.

14. Schwellerbereichdekorelement nach einem der vorangegangenen Ansprüche,
**dadurch gekennzeichnet, dass**
die Vorder- und/oder Rückseite des Dekorelementes mit einer Deckschicht versehen ist.

15. Schwellerbereichdekorelement nach einem der vorangegangenen Ansprüche,
**dadurch gekennzeichnet, dass**
an der Rückseite (1b) des Dekorelementes Haftmittel zur Fixierung des Dekorelementes auf einer zu dekorierenden Oberfläche angebracht sind.

16. Schwellerbereichdekorelement nach einem der vorangegangenen Ansprüche,
**dadurch gekennzeichnet, dass**
die linienförmige Nut (6; 6'; 6") in ihrem Verlauf unterschiedliche Tiefen aufweist.

17. Schwellerbereichdekorelement nach einem der vorangegangenen Ansprüche,
**dadurch gekennzeichnet, dass**
die linienförmige Nut einen im Wesentlichen senkrecht zur Oberfläche (1b9 des Flachteils (1) sich erstreckenden Tiefenverlauf aufweist.

18. Schwellerbereichdekorelement nach einem der Ansprüche 1-17,
**dadurch gekennzeichnet, dass**
die linienförmige Nut einen zur Oberfläche (1b) des Flachteils (1) angewinkelten Tiefenverlauf aufweist.

## Claims

1. Decorative element for a rocker panel zone,
**characterized in that**
a transparent flat part (1) having at least one printed area (2, 2a-2e; 2', 2'a-2'f; 2"a-2"c; 3; 3'; 3"; 8") affixed thereon extends at least partly over at least one surface (1a, 1b) of flat part (1) exhibiting at least one laser-generated linear groove (6; 6'; 6"; 6"') along the boundary of said printed area, wherein one depth (5) of said groove exhibits a value corresponding to 0.5 to 0.75 times the thickness (4) of flat part (1).

2. Decorative element for a rocker panel zone in accordance with claim 1,
**characterized in that**
a first groove (6"') within the printed area (2''a-2''c) and a second groove (6") external the printed area (2"a-2"c) runs parallel to the boundary of said printed areas.

3. Decorative element for a rocker panel zone according to one of the preceding claims,
**characterized in that**
a first printed area (2a-2e; 2'a-2'e; 2"a-2"c) exhibits one lettering and a second printed area (3; 3'; 3") constitutes an area surrounding said lettering.

4. Decorative element for a rocker panel zone in accordance with claim 3,
**characterized in that**
the first, second and each further printed area (2, 2a-2e; 2', 2'a-2'f; 2"a-2"c; 3; 3'; 3"; 8") exhibits different surface structures and/or color schemes and/or optical effects.

5. Decorative element for a rocker panel zone according to one of the preceding claims,
**characterized in that**
printed areas (2, 2a-2e; 2', 2'a-2'f; 2"a-2"c; 3; 3'; 3"; 8") are affixed on the rear side (1b) of transparent flat part (1).

6. Decorative element for a rocker panel zone according to one of claims 1-4,
**characterized in that**
one printed area (2', 2'a-2'e) is affixed on the front side (1a) and a second printed area (3') is affixed on the rear side.

7. Decorative element for a rocker panel zone according to one of the preceding claims,
**characterized in that**
printed areas (2, 2a-2e; 2', 2'a-2'f; 2"a-2"c; 3; 3'; 3"; 8") are made of a UV-resistant and temperature-resistant material, especially for a temperature range between -50° and +150° C.

8. Decorative element for a rocker panel zone according to one of the preceding claims,
**characterized in that**
the material of the printed areas (2, 2a-2e; 2', 2'a-2'f; 2"a-2"c; 3; 3'; 3"; 8") contains iridescent effect pigments.

9. Decorative element for a rocker panel zone according to one of the preceding claims,
**characterized in that**
the front, respectively visible side (1a) of flat part (1) is configured to be of a high-gloss and/or structured finish.

10. Decorative element for a rocker panel zone according to one of the preceding claims,
**characterized in that**
flat part (1) is configured to be color translucent.

11. Decorative element for a rocker panel zone according to one of the preceding claims,
**characterized in that**
the material of flat part (1) is an acrylic material.

12. Decorative element for a rocker panel zone according to one of the preceding claims,
**characterized in that**
the material of flat part (1) is a polycarbonate.

13. Decorative element for a rocker panel zone according to one of the preceding claims,
**characterized in that**
transparent flat part (1) exhibits a thickness in a range between 0.3 mm and 10 mm.

14. Decorative element for a rocker panel zone according to one of the preceding claims,
**characterized in that**
the front and/or rear side of the decorative element is provided with a coating layer.

15. Decorative element for a rocker panel zone according to one of the preceding claims,
**characterized in that**
an adhesive for fixing said decorative element to a surface to be decorated is applied to the rear side (1b) of said decorative element.

16. Decorative element for a rocker panel zone according to one of the preceding claims,
**characterized in that**
said linear groove (6; 6'; 6") exhibits different depths along its progression.

17. Decorative element for a rocker panel zone according to one of the preceding claims,
**characterized in that**
said linear groove exhibits a continuation of depth extending substantially perpendicular to surface (1b) of flat part (1).

18. Decorative element for a rocker panel zone according to one of claims 1-17,
**characterized in that**
said linear groove exhibits a continuation of depth angled to surface (1b) of flat part (1).

## Revendications

1. Élément décoratif de bas de caisse,
**caractérisé en ce que**
une partie plate transparente (1), comportant au moins une surface imprimée (2, 2a - 2e ; 2', 2'a - 2'f ; 2"a - 2"c ; 3 ; 3' ; 3" ; 8"), s'étendant au moins partiellement sur au moins une surface extérieure (1a, 1b) de la partie plate (1), présente le long de la limite de la surface imprimée au moins une rainure linéaire (6 ; 6' ; 6" ; 6"') réalisée au moyen d'un faisceau laser, une profondeur (5) de la rainure ayant une valeur correspondant à 0,5 à 0,75 de l'épaisseur (4) de la partie plate (1).

2. Élément décoratif de bas de caisse selon la revendication 1,
**caractérisé en ce que**
une première rainure (6"') s'étend à l'intérieur de la surface imprimée (2"a - 2"c) et une deuxième rainure (6") à l'extérieur de la surface imprimée (2"a - 2"c) parallèlement à la limite des surfaces imprimées.

3. Élément décoratif de bas de caisse selon l'une quelconque des revendications précédentes,
**caractérisé en ce que**
une première surface imprimée (2a - 2e ; 2'a - 2'e ; 2"a - 2"c) représente un écrit et une deuxième surface imprimée (3 ; 3' ; 3") une surface entourant l'écrit.

4. Élément décoratif de bas de caisse selon la revendication 3,
**caractérisé en ce que**
la première, la deuxième et chaque surface imprimée suivante (2, 2a - 2e ; 2', 2'a - 2'f ; 2"a - 2"c ; 3 ; 3' ; 3" ; 8") présentent des structures de surface extérieure et/ou des mises en couleur et/ou des effets visuels différents.

5. Élément décoratif de bas de caisse selon l'une quelconque des revendications précédentes,
**caractérisé en ce que**
les surfaces imprimées (2, 2a - 2e ; 2', 2'a - 2'f ; 2"a - 2"c ; 3 ; 3' ; 3" ; 8") sont apposées au dos (1b) de la partie plate transparente (1).

6. Élément décoratif de bas de caisse selon l'une quelconque des revendications 1 à 4,
**caractérisé en ce que**
une surface imprimée (2', 2'a - 2'e) est apposée au côté avant (1a) et une deuxième surface imprimée (3') est apposée au dos.

7. Élément décoratif de bas de caisse selon l'une quelconque des revendications précédentes,
**caractérisé en ce que**
les surfaces imprimées (2, 2a - 2e ; 2', 2'a - 2'f ; 2"a - 2"c ; 3 ; 3' ; 3" ; 8") sont en matériau résistant aux UV et à la température, en particulier pour une plage de température de -50° à +150 °C.

8. Élément décoratif de bas de caisse selon l'une quelconque des revendications précédentes,
**caractérisé en ce que**
le matériau des surfaces imprimées (2, 2a - 2e ; 2', 2'a - 2'f ; 2"a - 2"c ; 3 ; 3' ; 3" ; 8") contient des pigments d'effet iridescents.

9. Élément décoratif de bas de caisse selon l'une quelconque des revendications précédentes,
**caractérisé en ce que**
la face avant ou apparente (1a) de la partie plate (1) est fortement brillante et/ou structurée.

10. Élément décoratif de bas de caisse selon l'une quelconque des revendications précédentes,
**caractérisé en ce que**
la partie plate (1) est translucide de façon colorée.

11. Élément décoratif de bas de caisse selon l'une quelconque des revendications précédentes,
**caractérisé en ce que**
le matériau de la partie plate (1) est un matériau acrylique.

12. Élément décoratif de bas de caisse selon l'une quelconque des revendications précédentes,
**caractérisé en ce que**
le matériau de la partie plate (1) est du polycarbonate.

13. Élément décoratif de bas de caisse selon l'une quelconque des revendications précédentes,
**caractérisé en ce que**
la partie plate transparente (1) présente une épaisseur dans la plage des 0,3 mm à 10 mm.

14. Élément décoratif de bas de caisse selon l'une quelconque des revendications précédentes,
**caractérisé en ce que**
le côté avant et/ou le dos de l'élément décoratif est pourvu d'une couche de couverture.

15. Élément décoratif de bas de caisse selon l'une quelconque des revendications précédentes,
**caractérisé en ce que**
des agents adhésifs sont déposés sur le dos (1b) de l'élément décoratif pour fixer l'élément décoratif sur une surface à décorer.

16. Élément décoratif de bas de caisse selon l'une quelconque des revendications précédentes,
**caractérisé en ce que**
la rainure linéaire (6 ; 6' ; 6") possède des profondeurs différentes dans son évolution.

17. Élément décoratif de bas de caisse selon l'une quelconque des revendications précédentes,
**caractérisé en ce que**
la rainure linéaire présente une évolution de profondeur s'étendant pour l'essentiel perpendiculairement à la surface extérieure (1b) de la partie plate (1).

18. Élément décoratif de bas de caisse selon l'une quelconque des revendications 1 à 17,
**caractérisé en ce que**
la rainure linéaire présente une évolution de profondeur coudée par rapport à la surface (1b) de la partie plate (1).
